# EUROPÄISCHE PATENTSCHRIFT

(11) **EP 1 211 215 B1**
(45) Veröffentlichungstag und Bekanntmachung des Hinweises auf die Patenterteilung: **14.07.2004**
(21) Anmeldenummer: 01128517.8
(22) Anmeldetag: 29.11.2001
(51) Int. Cl.: B66F 9/07, F16B 5/02

(54) **Regalbediengerät und Verfahren zur Ausbildung eines Plattenstosses in einem Regalbediengerät**
Stacker crane and method for providing a plate connection in a stacker crane
Transstockeur et procédé pour la réalisation d' une connection à plaques dans un transstockeur

(30) Priorität: 02.12.2000 DE 10060085
(43) Veröffentlichungstag der Anmeldung: 05.06.2002
(73) Patentinhaber: Dambach Lagersysteme GmbH & Co. KG, 76571 Gaggenau (DE)
(72) Erfinder: Pflüger, Thomas, 76189 Karlsruhe (DE)
(74) Vertreter: Lasch, Hartmut Dipl.-Ing.

(56) Entgegenhaltungen:
- EP-A- 0 032 185
- EP-A- 0 433 890
- FR-A- 1 471 377
- FR-A- 2 176 484
- US-A- 4 690 365
- US-A- 5 067 592
- US-A- 5 878 540

## Beschreibung

Die Erfindung betrifft ein Verfahren zur Ausbildung eines Plattenstoßes in oder an einem Mast eines Regalbediengerätes, wobei an den zu stoßenden Bauteilen jeweils eine Stoßplatte angebracht wird und die Stoßplatten aufeinandergelegt und mittels einer Vielzahl von die Stoßplatten durchdringenden Befestigungsschrauben miteinander verbunden werden. Darüber hinaus betrifft die Erfindung ein Regalbediengerät mit einem Fahrwerk, auf dem zumindest ein Mast angeordnet ist, wobei in oder an dem Mast ein Plattenstoß genannten Aufbaus ausgebildet ist.

Regalbediengeräte werden in der Förder- und Lagertechnik für das Einlagern von Waren in Regalfächer sowie zum Auslagern aus diesen eingesetzt. Ein Regalbediengerät besitzt üblicherweise ein über Räder am Untergrund abgestütztes Fahrwerk, das zumindest einen vertikalen Mast trägt, an dem ein Hubwagen höhenverfahrbar gelagert ist, der die einoder auszulagernden Waren aufnehmen kann. Der Mast kann freistehend ausgebildet sein, bei einem höheren Mast ist dieser jedoch üblicherweise an seinem oberen Ende zusätzlich geführt.

Damit die einzelnen Regalfächer des Regals mittels des Regalbediengerätes mit hoher Genauigkeit angefahren werden können, muß der Mast relativ zu dem Fahrwerk sehr genau ausgerichtet sein und sich in der Regel exakt vertikal erstrecken. Bei der Herstellung bzw. Montage des Regalbediengerätes ist deshalb ein relativ hoher Aufwand notwendig, um die exakte Ausrichtung des Mastes zu gewährleisten. Der Mast ist an seinem Fuß über einen Plattenstoß auf dem Fahrwerk montiert. Ein gleichartiger Plattenstoß kann auch innerhalb eines aus zwei fluchtenden Mastabschnitten zusammengesetzten Mastes und/oder am oberen Ende des Mastes ausgebildet sein, wenn der Mast an seinem oberen Ende beispielsweise an einen Kopfträger angeschlossen ist. Im folgenden soll beispielhaft von dem Plattenstoß zwischen dem Fahrwerk und dem Mastfuß ausgegangen werden, jedoch ist die Erfindung auch auf die anderen genannten Plattenstöße in gleicher Weise anwendbar.

Der Plattenstoß zwischen dem Fuß des Mastes und dem Fahrwerk umfaßt eine erste, im wesentlichen horizontale Stoßplatte, die am unteren Ende des Mastes an diesen angeschweißt wird, und eine auf der Oberseite des Fahrwerks angeordnete zweite, im wesentlichen horizontale Stoßplatte. Die zweite Stoßplatte wird zunächst auf das Fahrwerk aufgeschweißt und dann oberflächlich plangefräst. Die erste Stoßplatte wird auf ihrer Unterseite ebenfalls plangefräst und an dem Fuß des vorgefertigten Mastes senkrecht zu dessen Längserstreckung angeschweißt, wobei die beiden Teile exakt zueinander ausgerichtet werden. Wenn dann auf der Baustelle der Mastfuß mit der ersten Stoßplatte auf die zweite Stoßplatte des Fahrwerks aufgesetzt und mittels einer Vielzahl von über den Umfang der Stoßplatten verteilten Befestigungsschrauben befestigt wird, erstreckt sich der Mast senkrecht zum Fahrwerk. Falls sich bei der Montage jedoch noch Lageabweichungen des Mastes ergeben sollten, müssen diese ausgeglichen werden. Die Montage des Mastes in senkrechter Ausrichtung zum Fahrwerk ist auf diese Weise sehr arbeitsaufwendig und damit zeit- und kostenintensiv.

Ein Verfahren, bzw. ein Regalbediengerät, gemäß dem Oberbegriff des Anspruchs 1, bzw. des Anspruchs 12, ist schon aus US-A-5 067 592 bekannt.

Der Erfindung liegt die Aufgabe zugrunde, ein Verfahren zur Ausbildung eines Plattenstoßes in oder an einem Mast eines Regalbediengerätes sowie ein entsprechendes Regalbediengerät zu schaffen, das eine exakte Ausrichtung des Mastes in einfacher Weise gewährleistet.

Hinsichtlich des Verfahrens wird diese Aufgabe erfindungsgemäß dadurch gelöst, daß die Stoßplatten mit Hilfe von Abstandshaltern unter Bildung eines Zwischenraums in eine gewünschte Relativausrichtung gebracht werden und daß der Zwischenraum anschließend abgedichtet und mit einem druckfesten Material ausgefüllt wird.

Erfindungsgemäß ist es möglich, auf ein Planfräsen der Stoßplatten zu verzichten. Die zweite Stoßplatte wird auf das Fahrwerk in horizontaler Ausrichtung angeschweißt, ohne daß nachfolgend eine spezielle Oberflächenbearbeitung durchgeführt wird. Die erste Stoßplatte wird am unteren Ende des Mastes senkrecht zu dessen Längserstreckung angeschweißt, wobei für die Ausrichtung der zweiten Stoßplatte relativ zum Mast möglichst einfache, schnell durchzuführende Ausrichtverfahren beispielsweise mittels Winkeleisen etc. verwendet werden. Wenn die beiden Stoßplatten vollflächig aufeinandergelegt werden, ist damit zu rechnen, daß sich Winkelfehler ergeben, d.h. der Mast nicht exakt vertikal ausgerichtet ist. Diese Winkelfehler lassen sich mit dem erfindungsgemäßen Verfahren jedoch in einfacher Weise ausgleichen.

Bei der Montage des Regalbediengerätes auf der Baustelle werden die beiden Stoßplatten aufeinandergelegt und mittels der die Stoßplatten durchdringenden, umlaufend angeordneten Befestigungsschrauben vorläufig zueinander positioniert. Nach der Montage der am Mast vorgesehenen Anbauteile, beispielsweise des Hubwagens, werden die die Stoßplatten haltenden Befestigungsschrauben wieder um ein geringes Maß gelöst und der Mast wird exakt vertikal ausgerichtet. Dazu bedient man sich entsprechender einstellbarer Abstandshalter zwischen den beiden Stoßplatten. Wenn der Mast seine exakte vertikale Ausrichtung erreicht hat, hat sich zwischen den Stoßplatten in der Regel ein Zwischenraum nichtkonstanter Höhe eingestellt, der in einem nachfolgenden Verfahrensschritt abgedichtet und mit einem druckfesten Material ausgefüllt wird. Die Abdichtung kann in einfacher Weise dadurch erfolgen, daß die Stoßplatten an ihrem umlaufenden Seitenrand mit einem Dichtungsband versehen werden. Das druckfeste Material, bei dem es sich beispielsweise um einen flüssigen Kunststoff, und insbesondere ein Kunstharz handeln kann, wird dann in den Zwischenraum eingegossen. Vorzugsweise wird das Material an einem Ende des Zwischenraumes solange eingefüllt, bis auf der gegenüberliegenden Seite des Zwischenraums an einem Indikator, beispielsweise einem Steiger, die vollständige Füllung des Zwischenraumes erkennbar ist. Das Material kann entweder drucklos eingegossen werden, es ist jedoch auch möglich, das Material unter Druck einzupressen oder mit Hilfe eines Unterdrucks im Zwischenraum in diesen einzusaugen. Nach der Aushärtung des druckfesten Materials können die Abstandshalter entfernt und die die Stoßplatten verbindenden Befestigungsschrauben wieder vollständig angezogen werden, so daß die beiden Stoßplatten miteinander verspannt sind und der Mast die gewünschte vertikale Ausrichtung relativ zu dem Fahrwerk besitzt.

Um eine mögliche Demontage des Mastes zu erleichtern, kann in Weiterbildung der Erfindung vorgesehen sein, daß zumindest eine der Stoßplatten auf ihrer den Zwischenraum begrenzenden Oberfläche mit einem Trennmittel versehen wird.

Als Abstandshalter finden in Weiterbildung der Erfindung Einstellschrauben Verwendung, die an zumindest einer der Stoßplatten gelagert sind bzw. mit dieser in Gewindeeingriff stehen. Insbesondere können mehrere Einstellschrauben über den Umfang der einen Stoßplatte gleichmäßig verteilt sein. Es hat sich als vorteilhaft erwiesen, bei rechteckigen Stoßplatten jeweils in den Eckbereichen einer Stoßplatte eine entsprechende Einstellschraube anzuordnen, die sich mit ihrem vorderen Ende an der anderen Stoßplatte abstützt. Durch Verstellen der Einstellschrauben kann der Abstand zwischen den Stoßplatten in den jeweiligen Eckbereichen verändert und somit die Relativneigung der Stoßplatten eingestellt werden.

Wie bereits erwähnt, kann ein entsprechender Plattenstoß im Anschlußbereich des Fußes des Mastes an das Fahrwerk des Regalbediengerätes, im Anschlußbereich des Kopfes des Mastes an einen oberen Kopfträger des Regalbediengerätes oder auch in einem Mast ausgebildet sein, wenn der Plattenstoß zwei Mastabschnitte miteinander verbindet.

Hinsichtlich des Regalbediengerätes wird die oben genannte Aufgabe dadurch gelöst, daß zwischen den Stoßplatten eine Ausgleichsschicht aus einem druckfesten Material angeordnet ist, die in vorgenannter Weise ausgebildet sein kann. Zusätzliche Merkmale des Regalbediengerätes ergeben sich aus der vorstehenden Beschreibung des erfindungsgemäßen Verfahrens.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine schematische Seitenansicht eines einmastigen Regalbediengerätes,
- Figur 2: eine schematische Seitenansicht eines zweimastigen Regalbediengerätes,
- Figur 3: die erste Phase der Ausbildung eines Plattenstoßes an einem Regalbediengerät,
- Figur 4: den Plattenstoß gemäß Fig. 3 in vormontiertem Zustand,
- Figur 5: den Plattenstoß nach exakter Ausrichtung des Mastes,
- Figur 6: das Einbringen des druckfesten Materials und
- Figur 7: den fertigen Plattenstoß.

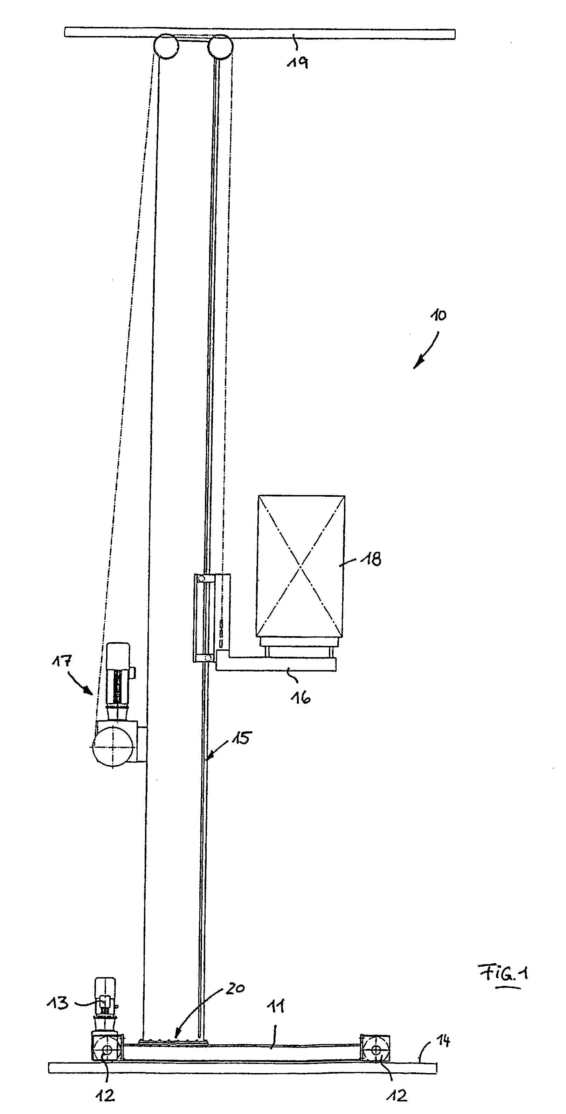

Fig. 1 zeigt in schematischer Darstellung eine Seitenansicht eines Regalbediengerätes 10, das ein Fahrwerk 11 mit mehreren Rädern 12 aufweist, über die es auf einem Untergrund 14 abgestützt ist. Das Fahrwerk 11 ist mittels eines Elektromotors 13 in herkömmlicher Weise angetrieben.

Auf der Oberseite des Fahrwerks 11 ist mittels eines Plattenstoßes 20 ein vertikaler Mast 15 gelagert, an dem ein Hubtisch 16 zur Aufnahme einer Last oder Ware 18 höhenverfahrbar gehalten ist, wobei die Höhenverfahrbarkeit des Hubtisches 16 in bekannter Weise mittels einer Elektrowinde 17 erreicht wird. Der Mast 15 ist an seinem oberen Ende in einer deckenseitigen Führung 19 geführt.

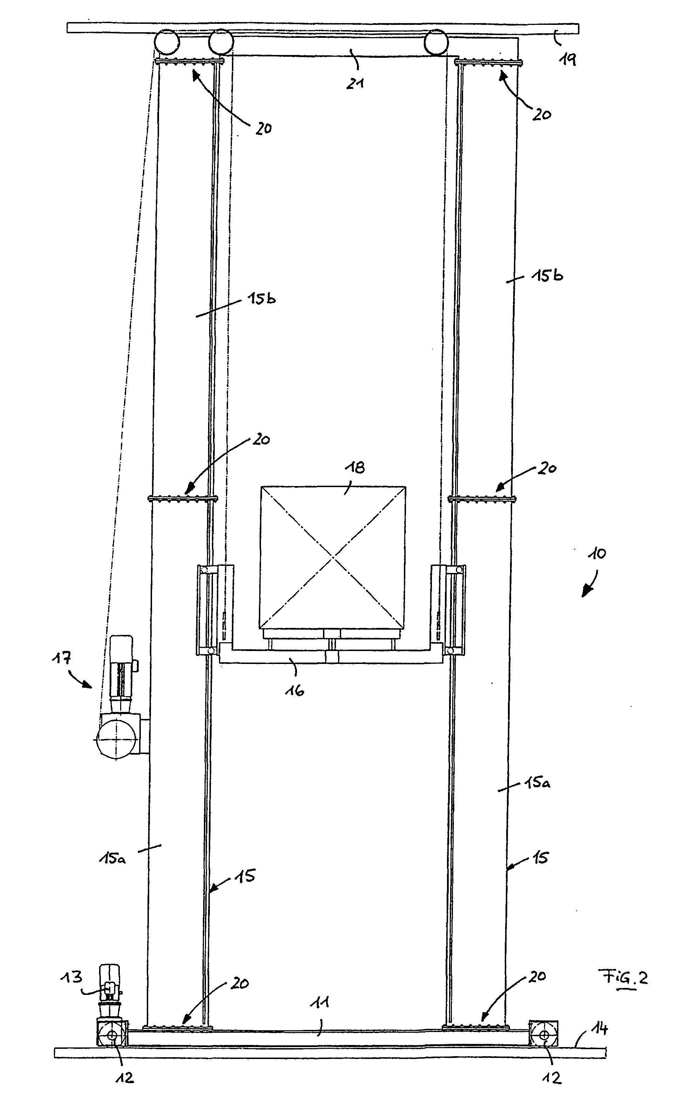

Fig. 2 zeigt ein gleichartiges Regalbediengerät 10, das jedoch gegenüber dem Regalbediengerät gemäß Fig. 1 zum Heben größerer Lasten ausgelegt ist und aus diesem Grunde auf dem Fahrwerk 11 zwei parallele vertikale Masten 15 besitzt, die an ihrem oberen Ende über einen Kopfträger 21 miteinander verbunden sind. Jeder Mast 15 ist aus zwei Mastabschnitten 15a und 15b zusammengesetzt, die an einem Plattenstoß 20 miteinander verbunden sind. Ein gleichartiger Plattenstoß 20 dient auch jeweils dem Anschluß des Kopfes des Mastes 15 an den Kopfträger 21.

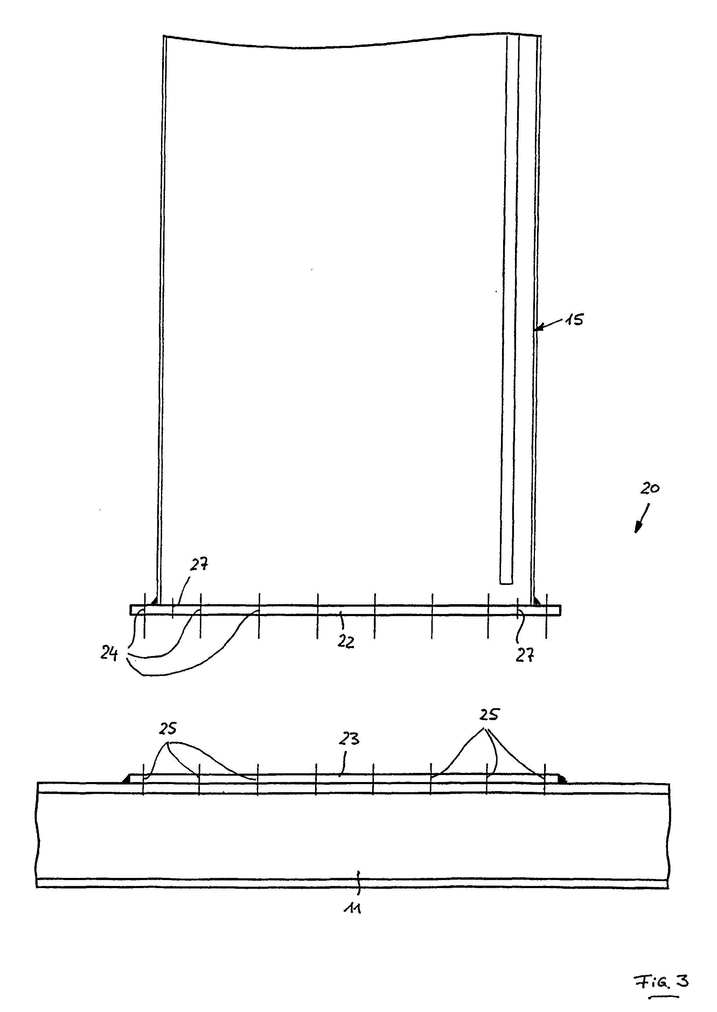

Im folgenden soll anhand der Fig. 3 bis 7 die Ausbildung eines Plattenstoßes 20 im einzelnen erläutert werden, wobei beispielhaft von dem Plattenstoß 20 zwischen dem Fahrwerk 11 und dem Fuß des Mastes 15 ausgegangen wird, jedoch sind auch die anderen genannten Plattenstöße 20 in gleicher Weise ausbildbar.

Gemäß Fig. 3 wird zunächst am unteren Ende des Mastes 15 eine erste Stoßplatte 22 angeschweißt, die mit einer Vielzahl von über den Umfang verteilten Durchgangsbohrungen 24 für später erläuterte Befestigungsschrauben sowie in ihren Eckbereichen mit jeweils einer Gewindebohrung 27 für später erläuterte Einstellschrauben versehen wird.

Eine zweite Stoßplatte 23 wird auf die Oberseite des Fahrwerks 11 aufgeschweißt und ebenfalls mit Durchgangsbohrungen 25 für die Befestigungsschrauben versehen, wobei die Durchgangsbohrungen 25 in gleicher Ausrichtung wie die Durchgangsbohrungen 24 der ersten Stoßplatte 22 angeordnet werden und mit diesen in Fluchtung gebracht werden können.

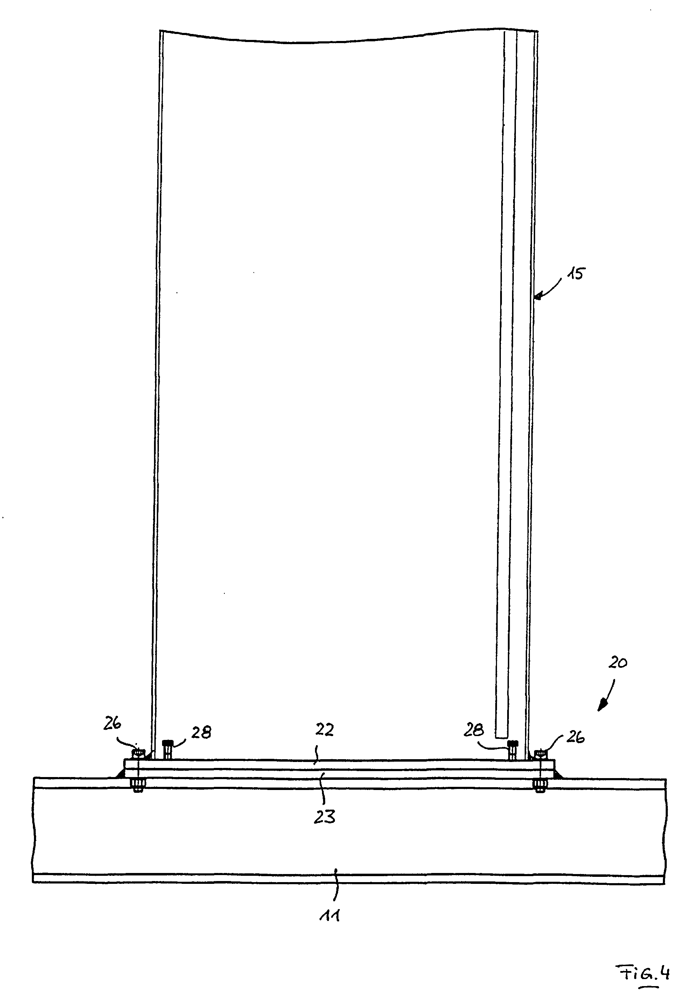

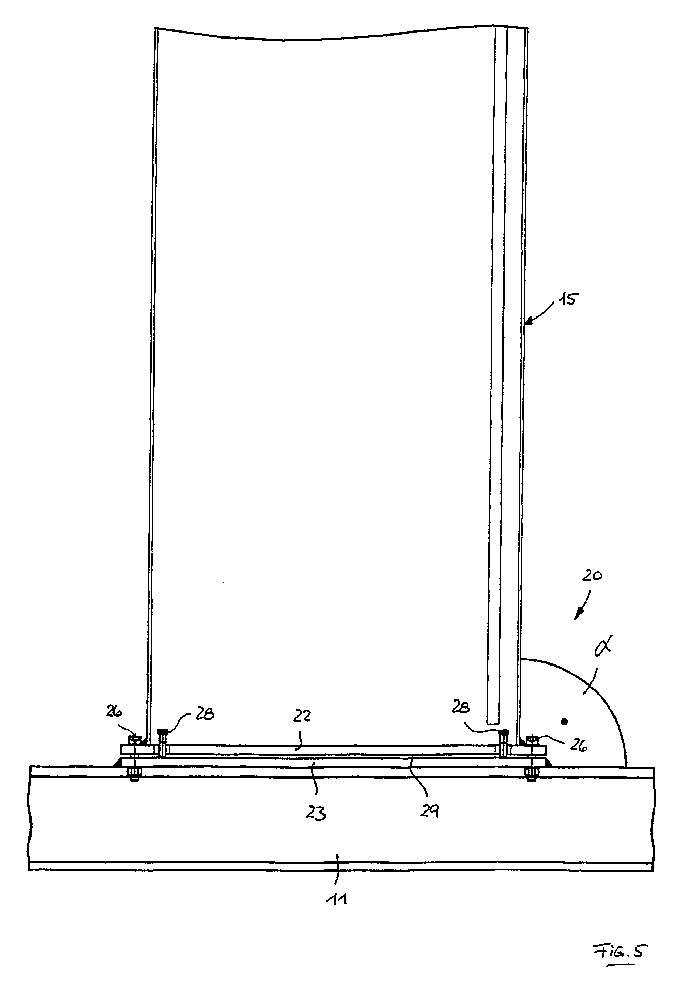

Anschließend wird der Mast 15 mit seiner ersten Stoßplatte 22 auf die zweite Stoßplatte 23 des Fahrwerks 11 aufgesetzt und an den fluchtenden Durchgangsbohrungen 24 und 25 jeweils mit einer Befestigungsschraube 26 versehen, von denen in Fig. 4 aus Gründen der Übersichtlichkeit nur zwei dargestellt sind. Zusätzlich wird von oben in die Gewindebohrungen 27 jeweils eine Einstellschraube 28 eingeschraubt, die sich mit ihrem unteren Ende auf der Oberfläche der zweiten Stoßplatte 23 des Fahrwerks 11 abstützt. Dieser Zustand ist in Fig. 4 dargestellt. In einem nachfolgenden Verfahrensschritt wird der Mast 15 exakt vertikal ausgerichtet. Zu diesem Zwecke werden die Befestigungsschrauben 26 um ein geringes Maß gelöst und durch individuelles Drehen der Einstellschrauben 28 kann die Neigung des Mastes 15 relativ zu dem Fahrwerk 11 verändert werden, wobei es sich zwischen den Stoßplatten 22 und 23 ein Zwischenraum 29 bildet. Die Einstellschrauben 28 werden solange betätigt, bis der Mast 15 im rechten Winkel a zu dem Fahrwerk 11 steht, wie es in Fig. 5 dargestellt ist.

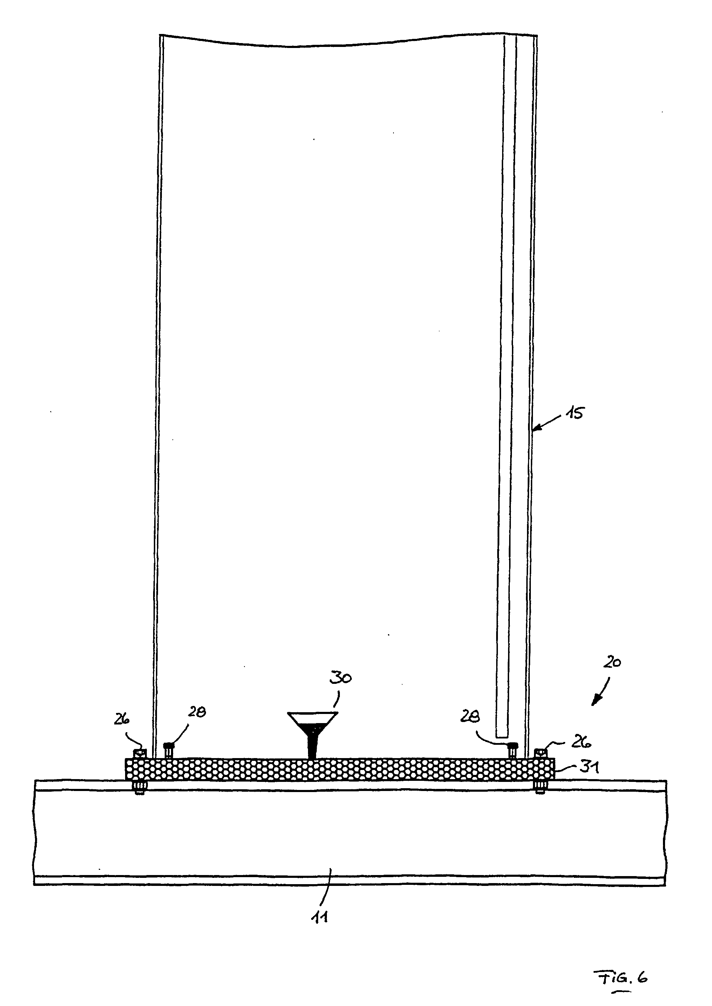

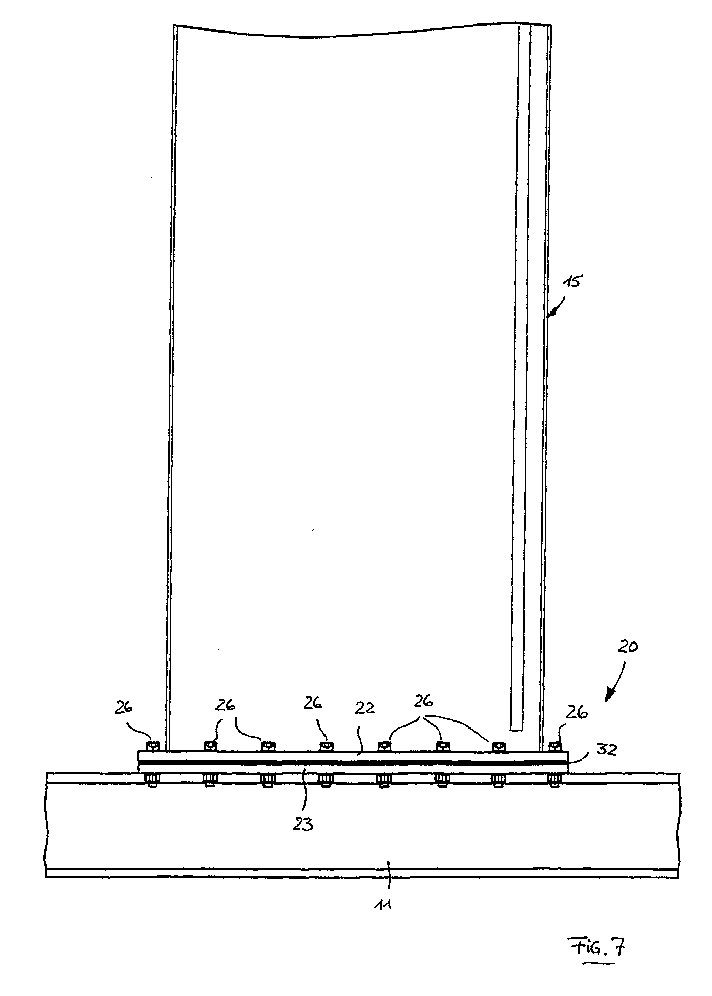

Die beiden Stoßplatten 22 und 23 sind gleich groß ausgebildet und genau übereinander angeordnet. Dies ermöglicht es, den zwischen den Stoßplatten 22 und 23 gebildeten Zwischenraum 29 mittels eines an den Seitenkanten der Stoßplatten 22 und 23 angebrachten, umlaufenden Klebe- bzw. Dichtbandes 31 abzudichten. Dabei wird an einer Seite des Zwischenraumes 29 eine Einfüllöffnung belassen, wie durch den Trichter 30 in Fig. 6 angedeutet ist. An der Einfüllöffnung wird nun ein flüssiger Kunststoff in den Zwischenraum 29 soweit eingefüllt, bis der Zwischenraum 29 vollständig oder zumindest annähernd vollständig gefüllt ist. Nachdem der Kunststoff ausgehärtet ist, bildet er eine zwischen den Stoßplatten 22 und 23 liegende Ausgleichsschicht 32, die in Fig. 7 dargestellt ist. Da das Material der Ausgleichsschicht 32 druckfest ist, können nach dem Entfernen der Einstellschrauben 28 in einem abschließenden Verfahrensschritt die Befestigungsschrauben 26 angezogen werden, wodurch der Mast 15 fest und in gewünschter Ausrichtung relativ zu dem Fahrwerk 11 an diesem befestigt ist.

## Patentansprüche

1. Verfahren zur Ausbildung eines Plattenstoßes (20) in oder an einem Mast (15) eines Regalbediengerätes (10), wobei an den zu stoßenden Bauteilen (11,15) jeweils eine Stoßplatte (22,23) angebracht wird und die Stoßplatten (22,23) aufeinandergelegt und mittels einer Vielzahl von die Stoßplatten (22,23) durchdringenden Befestigungsschrauben (26) miteinander verbunden werden, **dadurch gekennzeichnet, daß** die Stoßplatten (22,23) mit Hilfe von Abstandshaltern (28) unter Bildung eines Zwischenraumes (29) in eine gewünschte Relativausrichtung gebracht werden und daß der Zwischenraum (29) anschließend abgedichtet und mit einem druckfesten Material (32) ausgefüllt wird.

2. Verfahren nach Anspruch 1, **dadurch gekennzeichnet, daß** die Abdichtung des Zwischenraums (29) mittels eines umlaufenden Dichtungsbandes (31) erfolgt.

3. Verfahren nach Anspruch 1 oder 2, **dadurch gekennzeichnet, daß** der Zwischenraum (29) ausgegossen wird.

4. Verfahren nach Anspruch 3, **dadurch gekennzeichnet, daß** das Material ein flüssiger Kunststoff und insbesondere ein Kunstharz ist.

5. Verfahren nach einem der Ansprüche 1 bis 4, **dadurch gekennzeichnet, daß** zumindest eine der Stoßplatten (22,23) auf ihrer den Zwischenraum (29) begrenzenden Oberfläche mit einem Trennmittel versehen wird.

6. Verfahren nach einem der Ansprüche 1 bis 5, **dadurch gekennzeichnet, daß** die die Stoßplatten (22,23) durchdringenden Befestigungsschrauben (26) erst nach dem Aushärten des druckfesten Materials festgezogen werden.

7. Verfahren nach einem der Ansprüche 1 bis 6, **dadurch gekennzeichnet, daß** die Abstandshalter (28) von an zumindest einer der Stoßplatten (22) gelagerten Einstellschrauben gebildet sind.

8. Verfahren nach Anspruch 7, **dadurch gekennzeichnet, daß** mehrere Einstellschrauben über den Umfang der zumindest einen Stoßplatte (22) im wesentlichen gleichmäßig verteilt sind.

9. Verfahren nach einem der Ansprüche 1 bis 8, **dadurch gekennzeichnet, daß** der Plattenstoß (20) im Anschlußbereich des Fußes des Mastes (15) an ein Fahrwerk (11) des Regalbediengerätes (10) ausgebildet wird.

10. Verfahren nach einem der Ansprüche 1 bis 8, **dadurch gekennzeichnet, daß** der Plattenstoß (20) zwei Mastabschnitte (15a,15b) miteinander verbindet.

11. Verfahren nach einem der Ansprüche 1 bis 8, **dadurch gekennzeichnet, daß** der Plattenstoß (20) im Anschlußbereich des Kopfes des Mastes (15) an einen oberen Kopfträger (21) des Regalbediengerätes (10) ausgebildet wird.

12. Regalbediengerät mit einem Fahrwerk (11), auf dem zumindest ein Mast (15) angeordnet ist, wobei in oder an dem Mast (15) ein Plattenstoß (20) ausgebildet ist, der zwei, jeweils an den zu stoßenden Bauteilen angebrachte Stoßplatten (22,23) aufweist, die aufeinandergelegt und mittels einer Vielzahl von die Stoßplatten (22,23) durchdringenden Befestigungsschrauben (26) miteinander verbunden sind, **dadurch gekennzeichnet, daß** zwischen den Stoßplatten (22,23) eine Ausgleichsschicht (32) aus einem druckfesten Material angeordnet ist.

13. Regalbediengerät nach Anspruch 12, **dadurch gekennzeichnet, daß** das Material ein Kunststoff und insbesondere ein Kunstharz ist.

14. Regalbediengerät nach Anspruch 12 oder 13, **dadurch gekennzeichnet, daß** der Plattenstoß (20) im Anschlußbereich des Fußes des Mastes (15) an das Fahrwerk (11) des Regalbediengerätes (10) ausgebildet ist.

15. Regalbediengerät nach Anspruch 12 oder 13, **dadurch gekennzeichnet, daß** der Plattenstoß (20) zwei Mastabschnitte (15a,15b) miteinander verbindet.

16. Regalbediengerät nach Anspruch 12 oder 13, **dadurch gekennzeichnet, daß** der Plattenstoß (20) im Anschlußbereich des Kopfes des Mastes (15) an einen oberen Kopfträger (21) des Regalbediengerätes (10) ausgebildet ist.

## Claims

1. Method for the provision of a plate connection (20) in or on a mast (15) of a stacker crane (10), a butt plate (22, 23) being fitted to each of the components (11, 15) to be connected, the butt plates (22, 23) are placed on one another and interconnected by means of a plurality of fixing screws (26) penetrating the butt plates (22, 23), **characterized. in that** the butt plates (22, 23) are brought into a desired relative orientation, accompanied by the formation of a gap (29), with the aid of spacers (28) and that the gap (29) is subsequently sealed and filled with a pressure-resistant material (32).

2. Method according to claim 1, **characterized in that** the sealing of the gap (29) takes place by means of a circumferential sealing strip (31).

3. Method according to claim 1 or 2, **characterized in that** the gap (29) is filled.

4. Method according to claim 3, **characterized in that** the material is a liquid plastic and in particular a synthetic resin.

5. Method according to one of the claims 1 to 4, **characterized in that** the surface bounding the gap (29) of at least one of the butt plates (22, 23) is provided with a separating means.

6. Method according to one of the claims 1 to 5, **characterized in that** the fixing screws (26) penetrating the butt plates (22, 23) are only tightened after the hardening of the pressure-resistant material.

7. Method according to one of the claims 1 to 6, **characterized in that** the spacers (28) are formed by setscrews mounted on at least one of the butt plates (22).

8. Method according to claim 7, **characterized in that** several setscrews are substantially uniformly distributed over the circumference of at least one butt plate (22).

9. Method according to one of the claims 1 to 8, **characterized in that** the plate connection (20) is formed in the connection area of the base of the mast (15) to a travelling gear (11) of the stacker.crane (10).

10. Method according to one of the claims 1 to 8, **characterized in that** the plate connection (20) interconnects two mast sections (15a, 15b).

11. Method according to one of the claims 1 to 8, **characterized in that** the plate connection (20) is formed in the connection area of the head of the mast (15) to an upper head support (21) of the stacker crane (10).

12. Stacker crane having a travelling gear (11) on which is located at least one mast (15), a plate connection (20) being formed in or on the mast (15) and which has two butt plates (22, 23) in each case fitted to the components to be connected, said butt plates being placed on one another and interconnected by means of a plurality of fixing screws (26) penetrating the butt plates (22, 23), **characterized in that** a compensating layer (32) of a pressure-resistant material is placed between the butt plates (22, 23).

13. Stacker crane according to claim .12, **characterized in that** the material is a plastic and in particular a synthetic resin.

14. Stacker crane according to claim 12 or 13, **characterized in that** the plate connection (20) is formed in the connection area of the base of the mast (15) to the travelling gear (11) of the stacker crane (10).

15. Stacker crane according to claim 12 or 13, **characterized in that** the plate connection (20) interconnects two mast sections (15a, 15b).

16. Stacker crane according to claim 12 or 13, **characterized in that** the plate connection (20) is formed in the connection area of the head of the mast (15) to an upper head support (21) of the stacker crane (10).

## Revendications

1. Procédé de réalisation d'un about de plaques (20) dans ou sur un poteau (15) d'un transstockeur (10), dans lequel on monte sur les éléments constructifs (11,15) à abouter à chaque fois une plaque d'about (22,23) et dans lequel les plaques d'about (22,23) sont posées l'une sur l'autre et reliées entre elles par une pluralité de vis de fixation (26) traversant les plaques d'about (22,23), **caractérisé en ce que** les plaques d'about (22,23) sont amenées dans une direction relative souhaitée au moyen d'entretoises (28) par formation d'un espace intermédiaire (29) et **en ce que** l'espace intermédiaire (29) est ensuite rendu étanche et rempli d'un matériau (32) résistant à la pression.

2. Procédé selon la revendication 1, **caractérisé en ce que** l'étanchéité de l'espace intermédiaire (29) est réalisée au moyen d'une bande d'étanchéité périmétrique (31).

3. Procédé selon la revendication 1 ou 2, **caractérisé en ce que** l'espace intermédiaire (29) est scellé.

4. Procédé selon la revendication 3, **caractérisé en ce que** le matériau est une matière synthétique liquide et en particulier une résine synthétique.

5. Procédé selon l'une quelconque des revendications 1 à 4, **caractérisé en ce qu'**au moins une des plaques d'about (22,23) comporte un moyen de séparation sur sa surface délimitant l'espace intérieur (29).

6. Procédé selon l'une quelconque des revendications 1 à 5, **caractérisé en ce que** les vis de fixation (26) traversant les plaques d'about (22,23) ne sont serrées qu'après durcissement du matériau résistant à la pression.

7. Procédé selon l'une quelconque des revendications 1 à 6, **caractérisé en ce que** les entretoises (28) sont constituées par des vis de réglage montées sur au moins une des plaques d'about (22).

8. Procédé selon la revendication 7, **caractérisé en ce que** plusieurs vis de réglage sont réparties de manière sensiblement régulière sur la périphérie d'une au moins plaque d'about (22).

9. Procédé selon l'une quelconque des revendications 1 à 8, **caractérisé en ce que** l'about de plaques (20) est réalisé dans la zone d'aboutement du pied du poteau (15) au niveau d'un mécanisme de déplacement (11) du transstockeur (10).

10. Procédé selon l'une quelconque des revendications 1 à 8, **caractérisé en ce que** l'about de plaques (20) relie entre eux deux tronçons de poteau (15a, 15b).

11. Procédé selon l'une quelconque des revendications 1 à 8, **caractérisé en ce que** l'about de plaques (20) est réalisé dans la zone d'aboutement de la tête du poteau (15) au niveau d'un sommier supérieur (21) du transstockeur (10).

12. Transstockeur comprenant un mécanisme de déplacement (11), sur lequel est disposé au moins un poteau (15), un about de plaques (20) étant réalisé dans ou sur le poteau (15) présentant deux plaques d'about (22,23) montées chacune sur les éléments constructifs à abouter, disposées l'une sur l'autre et reliées entre elles par une pluralité de vis de fixation (26) traversant les plaques d'about (22,23), **caractérisé en ce qu'**une chape (32) en matériau résistant à la pression est disposée entre les plaques d'about (22, 23).

13. Transstockeur selon la revendication 12, **caractérisé en ce que** le matériau est une matière synthétique et en particulier une résine synthétique.

14. Transstockeur selon la revendication 12 ou 13, **caractérisé en ce que** l'about de plaques (20) est réalisé dans la zone de connexion du pied du poteau (15) au niveau du mécanisme de déplacement (11) du transstockeur (10).

15. Transstockeur selon la revendication 12 ou 13, **caractérisé en ce que** l'about de plaques (20) relie entre eux deux tronçons de poteau (15a, 15b).

16. Transstockeur selon la revendication 12 ou 13, **caractérisé en ce que** l'about de plaques (20) est réalisé dans la zone de connexion de la tête du poteau (15) au niveau d'un sommier supérieur (21) du transstockeur (10).
